# EUROPÄISCHE PATENTANMELDUNG

(11) **EP 1 306 863 A1**
(43) Veröffentlichungstag der Anmeldung: **02.05.2003**
(21) Anmeldenummer: 01811033.8
(22) Anmeldetag: 23.10.2001
(51) Int. Cl.: H01G 4/012

(54) **Folienkondensator und Folie für einen Folienkondensator**

(71) Anmelder: ABB RESEARCH LTD., 8050 Zürich (CH)
(72) Erfinder: Carlen, Martin, 5443 Niederrohrdorf (CH); Ohler, Christian, 5400 Baden (CH)
(74) Vertreter: ABB Patent Attorneys

(57) **Zusammenfassung**

Der erfindungsgemässe Kondensator ist aus mindestens einer Folie (1) bestehend aus einer als Dielektrikum dienenden Trägerfolie (3) mit mindestens einer Leiterschicht (4) gewickelt. Er weist eine interne Serieschaltung auf. Diese wird dadurch bewirkt, dass die auf dem Dielektrikum aufgebrachte Leiterschicht (4) bzw. die Leiterschichten in Sektoren (4.1, 4.2) aufgeteilt ist/sind, die so gegenseitig angeordnet und ggf. miteinander verbunden sind, dass mehrere in Serie geschaltete Elementarkondensatoren gebildet werden. Er zeichnet sich im Wesentlichen dadurch aus, dass auf den Sektoren eine Strompfadstruktur ausgebildet ist, wobei zur Verringerung von durchschlagsbedingten Kapazitätsverlusten die Leiterschicht (4) einen hohen Flächenwiderstand aufweist und zur Reduktion des Flächengesamtwiderstandes die Strompfade (5, 6) der Strompfadstruktur einen deutlich verminderten Flächenwiderstand besitzen.

## Beschreibung

### Technisches Gebiet

Die Erfindung bezieht sich auf einen Folienkondensator und eine Folie für einen Folienkondensator. Der Folienkondensator ist aus mindestens einer Trägerfolie mit mindestens einer Leiterschicht aufgebaut, wobei die mindestens eine Leiterschicht so in Sektoren aufgeteilt ist und die Sektoren so gegenseitig angeordnet sind, dass der Folienkondensator eine interne Serieschaltung von Elementarkondensatoren aufweist.

### Stand der Technik

Folienkondensatoren existieren für einen weiten Kapazitätsbereich. Im Allgemeinen besteht bei solchen Folienkondensatoren das Dielektrikum aus einer Kunststoffolie. Die Elektroden bestehen aus leitenden Metallflächen. Diese Metallflächen sind entweder dünne Leiterfolien oder auf die Kunststoffolie aufgedampfte Leiterschichten. Wenn die Leiterschichten genügend dünn sind ― häufig sind sie im Vakuum aufgebrachte Al- oder Zn-Legierungen mit einer Dicke im Bereich von 10-20 nm― , besteht bei elektrischen Durchschlägen ein Selbstheilungseffekt, d.h. es verdampft die Metallschicht in einer Umgebung des Orts des Durchschlages. Bei einem elektrischen Durchschlag verdampft die Metallschicht in der Umgebung der Entladung oder an einer dafür vorgesehenen Stelle in deren Nähe. Nach einem Durchschlag kann der Kondensator weiterhin verwendet werden, wenn auch mit einer verringerten Kapazität.

Aus dem Stand der Technik sind Folien für Folienkondensatoren bekannt, welche segmentierte Metallisierungen aufweisen. Die einzelnen Segmente der Metallbeschichtung haben einen geringen Flächenwiderstand und sind durch grabenartige Aussparungen voneinander getrennt. Die Segmente sind verbunden durch Leiterbrücken mit einem kleinen Querschnitt. Diese Leiterbrücken dienen als Sicherungen, welche bei einem elektrischen Durchschlag das betroffene Segment von den übrigen Segmenten trennen. Wenn sich ein lokaler Durchschlag ereignet, ist die am Ort des Durchschlags freigesetzte Leistung durch die Sicherungen limitiert, wodurch ein grösserer Schaden vermieden werden kann.

In der DE-A 198 56 457 wird eine Folie beschrieben, welche Leiterschichten mit einer darauf ausgebildeten Strompfadstruktur besitzt. Die Leiterschichten selbst besitzen zur Verringerung von durchschlagsbedingten Kapazitätsverlusten einen hohen Flächenwiderstand. Die Strompfade verlaufen in der Leiterschicht und haben zur Verringerung des Gesamtflächenwiderstands einen geringeren Widerstand als die Leiterschicht. Die Strompfadstruktur besitzt einen Hauptstrompfad in der Folienrichtung und davon abzweigende Nebenstrompfade.

Aus der GB 2 276 765 sind Vielfachschichten von Kondensatorfolien für interne Serieschaltungen bekannt. Die Elektroden weisen eine Segmentierung auf und haben Zonen mit hohem elektrischem Widerstand, wo die Kapazität erzeugt wird, und Zonen mit geringem elektrischem Widerstand an den Orten der Verbindungsflächen.

Die US-Patentschrift 5,757,607 zeigt unsegmentierte Mehrfachschicht-Elektroden mit interner Serieschaltung und einem Profil in der Metallisierung.

Bestehende Elektroden für Hochspannungskondensatoren mit interner Serieschaltung benötigen eine relativ hohe Leitfähigkeit und Leiterbrücken zwischen den Segmenten oder profilierte Elektroden. Ein solches Kondensatordesign weist Nachteile in Bezug auf die Selbstheilungseigenschaften auf. Wegen der hohen Elektrodenleitfähigkeit wird beim Selbstheilungsprozess eine relativ hohe Energie freigesetzt und eine relativ grosse Fläche wird unbrauchbar gemacht. Wenn aber andererseits die Elektrodenleitfähigkeit verringert wird, hat das einen Anstieg der Verluste zur Folge.

Bei Lösungen mit Segmenten die durch Leiterbrücken ― Sicherungen ― verbunden sind ergibt sich in Kombination mit interner Serieschaltung ein zusätzliches Problem. Nach dem Durchbrennen der Sicherung können einzelne Segmente vollständig abgetrennt sein und kein definiertes elektrisches Potential mehr haben. Dies kann zu unerwünschten Aufladungseffekten führen. Daher sind segmentierte Elektroden für Hochspannungskondensatoren bisher eher nicht in Betracht gezogen worden. Der Bedarf nach einem selbstheilenden Kondensator mit interner Serieschaltung ist dadurch unverändert hoch.

### Darstellung der Erfindung

Es ist also eine Aufgabe der Erfindung, einen Kondensator für hohe Spannungen zur Verfügung zu stellen, welcher Nachteile von bestehenden Kondensatoren überwindet und welcher insbesondere bei einem Durchschlag selbstheilend ist, ohne dass dabei eine zu hohe Energie freigesetzt wird. Der Kondensator soll ausserdem auch bei Wechselstromanwendungen verlustarm arbeiten.

Diese Aufgabe wird gelöst durch die Erfindung, wie sie im unabhängigen Patentanspruch definiert ist.

Vorteilhafte Ausgestaltungen des Kondensators gehen aus den abhängigen Ansprüchen hervor.

Ebenfalls Gegenstand der Erfindung ist eine Folie für einen Folienkondensator gemäss Anspruch 14.

Der erfindungsgemässe Kondensator besitzt mindestens eine Trägerfolie als Dielektrikum und weist eine interne Serieschaltung auf. Diese wird dadurch bewirkt, dass die auf dem Dielektrikum aufgebrachte Leiterschicht bzw. die Leiterschichten in Sektoren aufgeteilt ist/sind, die so gegenseitig angeordnet und ggf. miteinander verbunden sind, dass mehrere in Serie geschaltete Elementarkondendsatoren gebildet werden. Er zeichnet sich im Wesentlichen dadurch aus, dass auf den Sektoren eine Strompfadstruktur ausgebildet ist, wobei zur Verringerung von durchschlagsbedingten Kapazitätsverlusten die Leiterschicht einen hohen Flächenwiderstand aufweist und zur Reduktion des Flächengesamtwiderstandes die Strompfade der Strompfadstruktur einen deutlich verminderten Flächenwiderstand besitzen. Die Sektoren können so ausgebildet sein, dass sich eine interne Serieschaltung von zwei, drei, vier, fünf, sechs oder mehr Elementarkondensatoren erbgibt.

Ein möglichst grosser Flächenwiderstand der Leiterschicht begrenzt bei einem Durchschlag den Bereich, wo die Leiterschicht verdampft. Dadurch wird die Kapazität des Kondensators entsprechend nur um wenig vermindert; auch fliesst weniger Strom und der Energieverlust während eines Durchschlags ist gering. Dies hat eine verlängerte Lebensdauer des Kondensators zur Folge. Indem durch Strompfade mit einem möglichst kleinen Widerstand der Flächengesamtwiderstand reduziert ist, verringern sich auch die Ohmschen Verluste bei einem Auf- oder Entladevorgang im normalen Betrieb. Ein erfindungsgemässer Kondensator mit interner Serieschaltung für Hochspannungsanwendungen ermöglicht also, dass bei Durchschlägen die Kapazität nur um wenig vermindert wird und trotzdem nur kleine in Form von Wärme im Kondensator anfallende Verluste in Kauf genommen werden müssen. Ausserdem kann er ohne als Sicherungen dienende Leiterbrücken auskommen. Daher kann es auch nicht ohne Weiteres geschehen, dass ein abgetrenntes Segment kein definiertes Potential mehr hat.

Gemäss einer Ausführungsform besitzen die Sektoren der Leiterschicht je einen Hauptstrompfad sowie Nebenstrompfade. Die Sektoren verlaufen beispielsweise streifenförmig, wobei dann die Hauptstrompfade im Wesentlichen entlang der Streifen-Längsachsen verlaufen.

Die einzelnen Sektoren des Kondensators können zur zusätzlichen Verminderung von Kapazitätsverlusten bei Durchschlägen ihrerseits aus miteinander elektrisch verbundenen Segmenten bestehen. In den einzelnen Segmenten können Nebenstrompfade verlaufen, während die Segmente untereinander durch Hauptstrompfade verbunden sind. Alternativ dazu können die Segmente aber auch in an sich bekannter Art durch Leiterbrücken verbunden sein.

Der Oberflächenwiderstand der Leiterschicht der beträgt vorzugsweise mindestens 5 Ω, besonders bevorzugt mindestens 20 Ω. Der Flächenwiderstand der Strompfade ist deutlich geringer, vorzugsweise um mindestens einen Faktor 20 und beispielsweise um mindestens einen Faktor 50. Entsprechend können die Strompfade so ausgebildet sein, dass sie nur einen kleinen Teil der Fläche der Leiterschicht bedecken, beispielsweise 10% oder weniger.

Die Strompfade können durch lokale Verdickungen der Leiterschicht gebildet sein, wodurch die Strompfadstrukutur eine über die elektrisch leitende Struktur erhabene Kontur besitzt. Alternativ dazu kann auch ein Gerippe von Metallstreifen aus einem anderen Material auf der Leiterschicht angebracht sein. Die Leiterschichten könnten im Prinzip sogar an den Stellen der Strompfade Unterbrechungen aufweisen, welche durch die die Strompfade bildenden Metallstreifen überbrückt sind.

Der Folienkondensator ist beispielsweise gewickelt. Dazu können gemäss einem ersten Beispiel zwei einseitig beschichtete Trägerfolien verwendet werden, deren die Elektroden bildenden Leiterschicht-Sektoren zueinander versetzt angeordnet sind, wodurch sich automatisch eine Serieschaltung ergibt. Alternativ dazu kann auch eine beidseitig mit einer Leiterschicht versehene Trägerfolie zusammen mit einer unbeschichteten Trägerfolie verwendet werden. Die Sektoren der Leiterschichten auf den beiden Seiten der Trägerfolie sind dann ebenfalls zueinander versetzt angeordnet.

### Kurze Beschreibung der Zeichnungen

Im Folgenden wird die Erfindung anhand von Ausführungsbeispielen und mit Bezug auf sehr schematische Zeichnungen noch näher erläutert. In den Zeichnungen zeigen:
- Figuren 1 und 2 eine nicht masstabgetreue Draufsicht auf und eine ebenfalls nicht massstäbliche perspektivische Ansicht einer ersten Folie eines erfindungsgemässen Kondensators,
- Figuren 3 und 4 eine nicht massstabgetreue Draufsicht bzw. perspektivische Ansicht einer zweiten Folie eines erfindungsgemässen Kondensators, und
- Figuren 5 und 6 eine nicht massstäbliche Draufsicht auf eine erste und eine zweite Folie einer weiteren Ausfuhrungsform des erfindungsgemässen Kondensators

### Wege zur Ausführung der Erfindung

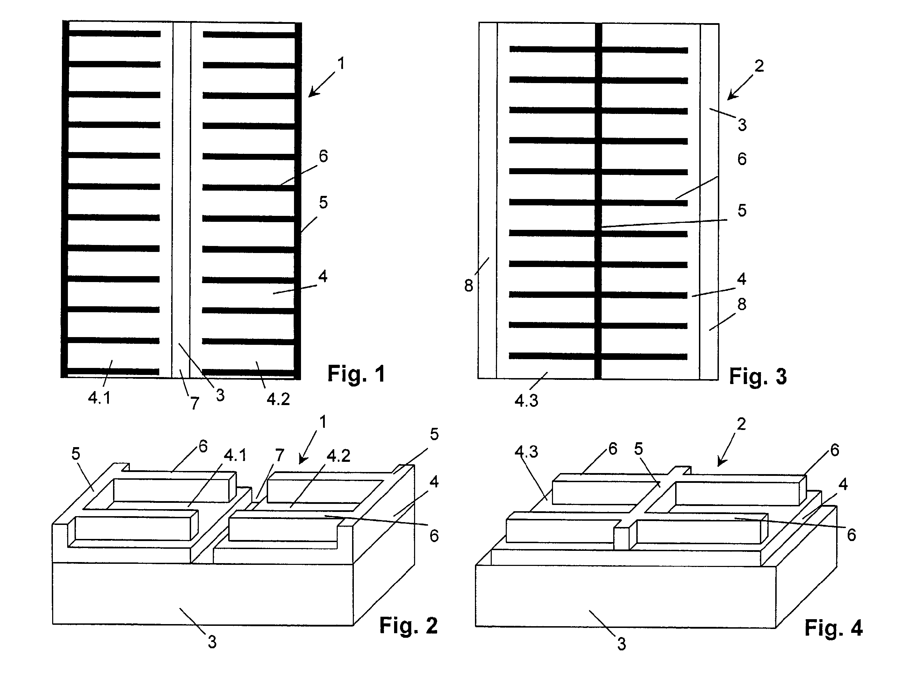

Die Figuren 1 und 2 zeigen eine erste Folie 1 einer sehr einfachen Ausführungsform eines erfindungsgemässen Kondensators. Eine Trägerfolie 3 aus einem dielektrischen Kunststoff ist mit einer Leiterschicht 4 versehen. Die Leiterschicht ist metallisch ― beispielsweise aus Zn oder einer Zn-Legierung ― oder aus einem elektrisch leitenden Kunststoff gebildet. Die Dicke der Trägerfolie beträgt ca. 2-20 µm, diejenige der Leiterschicht, wenn sie aus Zink ausgebildet ist, weniger als 20 nm.

Die Folie ist streifenförmig ausgedehnt, wobei in den Figuren in Längsrichtung jeweils nur ein Ausschnitt aus dem Streifen dargestellt ist. An beiden Rändern der Folie besitzt die Leiterschicht je eine lokale Verdickung, die einen Hauptstrompfad 5 bildet. Die Hauptstrompfade 5 der ersten Folie 1 dienen gleichzeitig als Kantenverstärkungen. Von den Hauptstrompfaden zweigen im Wesentlichen senkrecht dazu Nebenstrompfade 6 ab, welche ebenfalls durch lokale Verdickungen der Leiterschicht gebildet werden und ins Streifeninnere verlaufen. Die Haupt- 5 und Nebenstrompfade 6 sind beispielsweise aus demselben Material gefertigt wie die Leiterschicht 4. Wenn sie aus Zn bestehen, sind sie 400 nm dick oder noch dicker. Sie können aber auch aus einem anderen Material gebildet sein, beispielsweise aus einem Metall mit einer erhöhten Leitfähigkeit wie Al etc., womit auch ihre Dicke reduziert werden kann. In der Mitte des Streifens ist die Leiterschicht durch eine Lücke 7 unterbrochen, in welcher die Trägerfolie 3 im Wesentlichen frei von einer leitenden Beschichtung ist. Durch diese Lücke 7 wird die Leiterschicht 4 in zwei Sektoren 4.1, 4.2 unterteilt.

Der Flächenwiderstand der Leiterschicht 4 und/oder der Nebenstrompfade 6 kann in Querrichtung zu den Sektor-Längsachsen ein Profil, beispielsweise einen Gradienten aufweisen und beispielsweise in Funktion vom Abstand vom Hauptstrompfad 5 abnehmen. Dieses kann durch Dicken- bzw. Breitenvariation oder durch Änderung der Materialzusammensetzung bewirkt sein.

Die in den Figuren 3 und 4 gezeigte zweite Folie 2 ist beispielsweise im Wesentlichen gleich bemessen wie die erste Folie und aus den gleichen Materialien gefertigt wie diese. Ihre Leiterschicht 4 besitzt aber einen in der Mitte verlaufenden Hauptstrompfad 5 mit gegen aussen ragenden Nebenstrompfaden 6. Entlang der Längskanten der Trägerfolie verlaufen freie Ränder 8, wo die Trägerfolie 3 frei von einer leitenden Beschichtung ist. Die Leiterschicht 4 ist nicht unterteilt, so dass sie einen einzigen Sektor 4.3 bildet.

Wie weiter unten dargelegt muss der Sektor 4.3 im Betriebszustand des Kondensators nicht von aussen kontaktiert werden. Ausserdem fliessen aufgrund der Anordnung bei einer Änderung der am Kondensator anliegenden Spannung im Sektor 4.3 der zweiten Folie in erster Linie Ströme in transversaler Richtung, d.h. Ströme in der Richtung, in der die Nebenstrompfade 6 verlaufen. Aus diesen Gründen kann auf der zweiten Folie 2 bzw. im Sektor 4.3 der zweiten Folie der Hauptstrompfad 5 auch weggelassen werden.

Im Folienkondensator sind die beiden Folien 1, 2 aufeinander gelegt und so gewickelt, dass der Kondensator im Querschnitt abwechslungsweise leitende und isolierenden Schichten aufweist. Dadurch, dass die Leiterschicht 4 der ersten Folie in zwei Sektoren 4.1, 4.2 unterteilt ist, bilden sich beim Aufeinanderlegen der beiden Folien 1, 2 zwei Elementarkondensatoren aus. Ein erster Elementarkondensator wird zwischen dem linken Sektor 4.1 der Leiterschicht der ersten Folie 1 und der linken Hälfte der Leiterschicht 4 der zweiten Folie 2. Der zweite Elementarkondensator wird zwischen der rechten Hälfte der Leiterschicht 4 der zweiten Folie 2 und dem rechten Sektor 4.2 der Leiterschicht der ersten Folie 1 gebildet. Dadurch, dass die Leiterschicht 4 der zweiten Folie zusammenhängend ist, sind die beiden Elementarkondensatoren automatisch in Serie geschaltet. Der Kondensator kann an den Kantenverstärkungen der ersten Folie kontaktiert werden.

Der Einfachheit halber besteht im gezeichneten Beispiel der Kondensator nur aus zwei Elementarkondensatoren, d.h. die Leiterschicht 4 der ersten Folie ist in lediglich zwei Sektoren unterteilt, während die Leiterschicht 4 der zweiten Folie nur aus einem einzigen Sektor 4.3 besteht. Häufig werden aber die Leiterschichten beider Folien mehrere durch entlang der Längsrichtung verlaufende Lücken getrennte Sektoren aufweisen. Die Sektoren der ersten und der zweiten Leiterschicht sind dann zueinander versetzt. Elementarkondensatoren werden jeweils zwischen einer Hälfte eines Sektors und der anderen Hälfte eines gegenüberliegenden Sektors gebildet. Durch die Verbindung der Sektorhälften werden die Kondensatoren paarweise in Serie geschaltet, so dass eine Serieschaltung von beliebig vielen Elementarkondensatoren bewirkt werden kann. Die Hauptstrompfade verlaufen im Innern, vorzugsweise in der Nähe der Mitte der Sektoren. Lediglich die ganz am Rand angeordneten Sektoren sind analog den Sektoren 4.1 und 4.2 der gezeichneten ersten Folie 1 mit Hauptstrompfaden versehen, welche an der Längskante verlaufen und gleichzeitig zur Kantenverstärkung dienen und kontaktiert werden können.

Die Nebenstrompfade 6 der ersten und der zweiten Folie sind vorzugsweise ebenso wie die Hauptstrompfade 5 zueinander versetzt angeordnet.

Die Leiterschichten 4 sämtlicher gezeichneter Folien haben eine reduzierte Leitfähigkeit. Konkret bedeutet das, dass ihr Flächenwiderstand mindestens 5 Ω, vorzugsweise mindestens 20 Ω beträgt. Die Strompfade 5, 6 hingegen haben eine möglichst grosse Leitfähigkeit, d.h. beispielsweise einen Flächenwiderstand von 1 Ω oder weniger. Wenn sich ein Durchschlag ereignet, wird durch den grossen Widerstand der betroffene Bereich auf eine kleine den Ort des Durchschlags umgebende Fläche beschränkt, so dass die Kapazität des Kondensators nur wenig beeinträchtigt wird. Damit ist die durchschlagsbedingte Alterung des Kondensators gering. Andererseits ist der Gesamtflächenwiderstand als gemittelter Flächenwiderstand aufgrund der hohen Leitfähigkeit der Strompfade nicht hoch, wodurch die Verluste im Normalbetrieb klein gehalten werden.

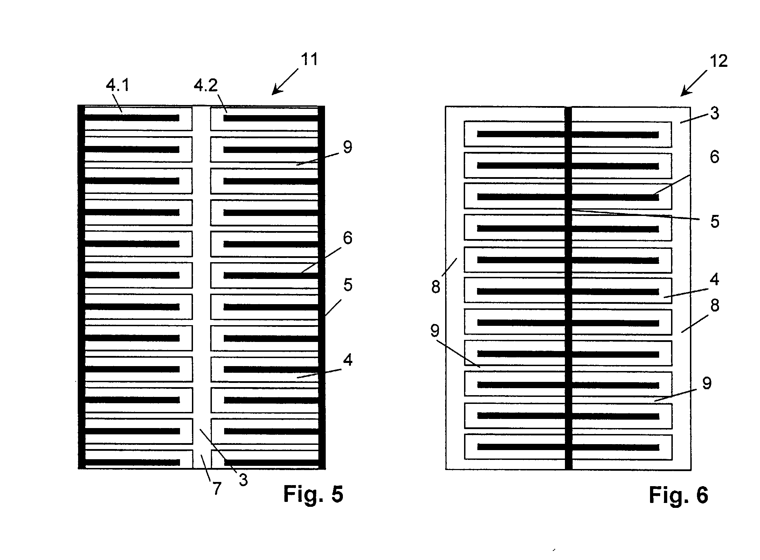

In den Figuren 5 und 6 ist eine erste Folie 11 und eine zweite Folie 12 gezeichnet, welche in ihrer Funktion und im Aufbau den Folien 1, 2 der Figuren 1 bis 4 in weiten Teilen entsprechen. Die Leiterschicht-Sektoren 4.1, 4.2 der Leiterschicht 4 der ersten Folie und die einen einzigen Sektor bildende Leiterschicht 4 der zweiten Folie sind aber segmentiert. Sie weisen in regelmässigen Abständen grabenartige Aussparungen 9 auf, wo die Trägerfolie im Wesentlichen frei von einer leitenden Beschichtung ist. Im gezeichneten Beispiel verlaufen die Aussparungen 9 parallel zu den Nebenstrompfaden 6 und in der Mitte zwischen zwei benachbarten Nebenstrompfaden, d.h. die Nebenstrompfade 6 verlaufen ungefähr in der Mitte der Segmente.

Die Segmentierung führt dazu, dass die durchschlagsbedingten Kapazitätsverluste noch zusätzlich vermindert werden. Die beim Durchschlag betroffene Fläche wird nämlich zusätzlich durch die Ränder der Segmente begrenzt.

Eine Segmentierung ist insbesondere dann hilfreich, wenn der Flächenwiderstand der Leiterschichten verhältnismässig gering, beispielsweise im Bereich zwischen 5 Ω und 70 Ω, gewählt ist.

Es sei noch erwähnt, dass die Erfindung selbstverständlich nicht auf die erläuterten Ausführungsbeispiele beschränkt ist. Insbesondere können die Materialien der Trägerfolie, der Leiterschicht und der Strompfade im Rahmen des fachüblichen Handelns beliebig variiert werden. Auch die Dicke der Trägerfolie und der Leiterschicht kann variiert und den Erfordernissen eines bestimmten Kondensatoraufbaus angepasst werden. Die Form der Folie kann beliebig gewählt werden. Die Strompfade können im Wesentlichen homogen sein oder alternativ dazu mit einem Gradienten im Widerstandswert ausgebildet sein. Die Hauptstrompfade können einen vom Flächenwiderstand der Nebenstrompfade verschiedenen Flächenwiderstand aufweisen, beispielsweise durch eine unterschiedliche Querschnittsfläche. Sie können aber auch den gleichen Flächenwiderstand aufweisen wie diese.

Der Kondensator kann aus zwei intern in Serie geschalteten Elementarkondensatoren oder aus einer Vielzahl solcher Kondensatoren bestehen. Die interne Serieschaltung kann wie in den beschriebenen Beispielen durch das versetzte Anordnen von Sektoren geschehen, die jeweils Elektroden von zwei Elementarkondensatoren bilden. Bis auf am Rand angeordnete Sektoren sind also in dieser Anordnung alle Sektoren an der Bildung von zwei Elementarkondensatoren beteiligt. Alternativ dazu können auch paarweise einander gegenüberliegende und sich in ihrer Fläche im Wesentlichen entsprechende Sektoren der Leiterschicht je einen Elementarkondensator bilden, wobei dann zwei Sektoren benachbarter Elementarkondensatoren zur Bildung der Serieschaltung durch einen Verbindungsleiter galvanisch verbunden sind. Im Verbindungsleiter verläuft bevorzugt ein Strompfad.

Der Kondensator kann aus mehreren, parallel und oder in Serie geschalteten Teilkapazitäten bestehen, wobei alle Teilkapazitäten bzw. mindestens einige der Teilkapazitäten aus beispielsweise zwei Folien gewickelt und gemäss der vorstehenden Beschreibung ausgeführt sind. Es ist beispielsweise möglich, mehrere aus zwei Folien mit Leiterschichten und gegeneinander versetzten Sektoren bestehende Teilkapazitäten so nebeneinander anzuordnen, dass die Kantenverstärkungen (gemäss Figuren 1 und 5) von nebeneinander liegenden Teilkapazitäten ― gegebenenfalls mit Hilfe von Kontaktmitteln ― miteinander galvanisch verbunden sind und die Teilkapazitäten auf diese Weise untereinander in Serie geschaltet sind.

Die dielektrische Trägerfolie 3 besteht bevorzugt aus Kunststoff, beispielsweise Polypropylen, PET, Polyester, Polystyrol, Polykarbonat, PEN oder aus Papier.

## Patentansprüche

1. Folienkondensator mit mindestens einer Trägerfolie (3) als Dielektrikum und mit mindestens einer darauf aufgebrachten Leiterschicht (4) wobei die mindestens eine Leiterschicht so in Sektoren (4.1, 4.2, 4.3) aufgeteilt ist und die Sektoren (4.1, 4.2, 4.3) so gegenseitig angeordnet sind, dass eine interne Serieschaltung von mindestens zwei Elementarkondensatoren gebildet wird, **dadurch gekennzeichnet, dass** auf den Sektoren (4.1, 4.2, 4.3) eine Strompfadstruktur ausgebildet ist, dass die Leiterschicht einen hohen Flächenwiderstand aufweist und dass die Strompfade (5, 6) der Strompfadstruktur einen geringeren Flächenwiderstand als die elektrisch leitende Schicht aufweisen.

2. Folienkondensator nach Anspruch 1, **dadurch gekennzeichnet, dass** in zumindest einigen Sektoren die Strompfadstruktur mindestens einen Hauptstrompfad (5) und davon abzweigende Nebenstrompfade (6) aufweist.

3. Folienkondensator nach Anspruch 2, **dadurch gekennzeichnet, dass** die Sektoren (4.1, 4.2, 4.3) streifenförmig verlaufen und dass die Hauptstrompfade (5) entlang der Sektor-Längsachsen verlaufen.

4. Folienkondensator nach einem Anspruch 2 oder 3, **dadurch gekennzeichnet, dass** der Flächenwiderstand der Leiterschicht (4) und/oder der Nebenstrompfade (6) vom Abstand vom nächstliegenden Hauptstrompfad abhängt.

5. Folienkondensator nach einem der vorangehenden Ansprüche, **dadurch gekennzeichnet, dass** mindestens einer der Sektoren (4.1, 4.2, 4.3) mindestens teilweise aus miteinander elektrisch verbundenen Segmenten besteht.

6. Folienkondensator nach Anspruch 5, **dadurch gekennzeichnet, dass** Strompfade (5) der Strompfadstruktur die Segmente verbinden.

7. Folienkondensator nach Anspruch 6, **dadurch gekennzeichnet, dass** die Segmente durch Hauptstrompfade (5) verbunden sind und dass innerhalb der Segmente Nebenstrompfade (6) verlaufen.

8. Folienkondensator nach Anspruch 5, **dadurch gekennzeichnet, dass** die Segmente der Sektoren durch Leiterbrücken verbunden sind.

9. Folienkondensator nach einem der vorangehenden Ansprüche, **dadurch gekennzeichnet, dass** der Oberflächenwiderstand der mindestens einen Leiterschicht (4) mindestens 5 Ω, vorzugsweise mindestens 20 Ω beträgt.

10. Folienkondensator nach einem der vorangehenden Ansprüche, **dadurch gekennzeichnet, dass** die Strompfade (5, 6) im Durchschnitt einen Flächenwiderstand aufweisen, welcher mindestens 10 mal geringer, vorzugsweise mindestens 20 mal geringer ist als derjenige der Leiterschicht.

11. Folienkondensator nach einem der vorangehenden Ansprüche, **dadurch gekennzeichnet, dass** die Strompfadstruktur durch lokale Verdickungen der Leiterschicht gebildet wird.

12. Folienkondensator nach einem der Ansprüche 1 bis 10, **dadurch gekennzeichnet, dass** die Strompfadstruktur dadurch gebildet wird, dass an den Orten der Strompfade (5, 6) Metallstreifen aus einem vom Material der Leiterschicht verschiedenen Metall aufgetragen sind.

13. Folienkondensator nach einem der vorangehenden Ansprüche, **dadurch gekennzeichnet, dass** er entweder aus zwei einseitig beschichteten Trägerfolien oder aus einer beidseitig beschichteten Trägerfolie und einer unbeschichteten Trägerfolie gewickelt ist, wobei sich im Querschnitt eine Folge von Lagen ergibt, die abwechslungsweise aus elektrisch isolierendem Material und einer als Elektrode dienenden Leiterschicht besteht.

14. Folienkondensator nach Anspruch 13, **dadurch gekennzeichnet, dass** die Strompfade (5, 6) zweier benachbarter Lagen zueinander versetzt angeordnet sind.

15. Folie (1, 11) für einen Folienkondensator nach einem der Ansprüche 1 bis 14 mit einer dielektrischen Trägerfolie (3) und mit mindestens einer darauf aufgebrachten Leiterschicht (4) wobei die mindestens eine Leiterschicht in galvanisch voneinander getrennte Sektoren (4.1, 4.2) aufgeteilt ist, wobei die Sektoren zur Verwendung als Elektroden von in Serie geschalteten Elementarkondensatoren ausgebildet sind, **dadurch gekennzeichnet, dass** auf den Sektoren (4.1, 4.2) eine Strompfadstruktur ausgebildet ist, dass die Leiterschicht einen hohen Flächenwiderstand aufweist und dass die Strompfade (5, 6) der Strompfadstruktur einen geringeren Flächenwiderstand als die elektrisch leitende Schicht aufweisen.
